(19) Europäisches Patentamt

European Patent Office

Office européen des brevets

(11) **EP 1 702 922 A2**

(12) **EUROPÄISCHE PATENTANMELDUNG**

(43) Veröffentlichungstag:
20.09.2006 Patentblatt 2006/38

(51) Int Cl.:
*C07F 9/09* *(2006.01)*

(21) Anmeldenummer: 06004543.2

(22) Anmeldetag: **07.03.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **18.03.2005 DE 102005012596**

(71) Anmelder: **LANXESS Deutschland GmbH
51369 Leverkusen (DE)**

(72) Erfinder:
• **Weiss, Thomas, Dr.
68259 Mannheim (DE)**
• **Grape, Wolfgang, Dr.
51061 Köln (DE)**
• **Elbert, Rainer, Dr.
51469 Bergisch Gladbach (DE)**
• **Hansel, Jan-Gerd
51069 Köln (DE)**
• **Kaulen, Johannes, Dr.
51519 Odenthal (DE)**

(54) **Herstellung von phosphorhaltigen Alkoxylierungsprodukten**

(57) Die Erfindung beschreibt ein Verfahren zur Herstellung von alkoxylierten, phosphorhaltigen Verbindungen, wobei heterogene Katalysatoren auf Basis von Metalloxiden des Aluminiums eingesetzt werden, so dass die Produktaufarbeitung wasserfrei erfolgen kann.

EP 1 702 922 A2

**Beschreibung**

Die Erfindung betrifft ein Verfahren zur Herstellung von phosphorhaltigen Alkoxylierungsprodukten mittels heterogener Katalysatoren, die als Flammschutzmittel in Polyurethanen eingesetzt werden können.

Die Herstellung von phosphorhaltigen Alkoxylierungsprodukten, insbesondere von organischen Phosphonaten und halogensubstituierten Alkylphosphaten ist dem Fachmann bekannt. Es werden vor allem Phosphorsäure, phosphorige Säure oder Phosphortrihalogenid, bevorzugt Phosphortrichlorid oder Phosphoroxihalogenid, insbesondere Phosphoroxichlorid, eingesetzt und mit Epoxiden wie Ethylenoxid, Propylenoxid und/oder Epichlorhydrin umgesetzt. Zur Erhöhung der Reaktionsgeschwindigkeit werden häufig Katalysatoren eingesetzt. Für homogen arbeitende Katalysatoren sind dem Fachmann viele Varianten bekannt.

Im Allgemeinen müssen aber die erhaltenen alkoxylierten Produkte in homogenkatalytisch arbeitenden Systemen aufwändig gereinigt werden. Die Nachbehandlung wird meist durch eine wässrige Aufarbeitung der rohen Reaktionsprodukte erreicht, wobei der Katalysator irreversibel zerstört und abgetrennt wird.

Dies wird z.B. in DD 125 035 beschrieben, wobei Inaktivierung bzw. Zerstörung des Titanhalogenid-Katalysators durch Zugabe einer stöchiometrischen Wassermenge oder Wäsche der phosphorhaltigen Alkoxylierungsprodukte mit Wasser oder Alkalien erreicht wird.

Derartige Nachbehandlungen zur Zerstörung bzw. Inaktivierung des Katalysators haben jedoch Nachteile. Sie erfordern zusätzlich Reaktoren, es kommt zu einer Verschlechterung der Raum-ZeitAusbeute und es treten Produktverluste auf. Die anfallenden Waschwässer müssen aufwändig entsorgt werden. Nicht zuletzt ist der eingesetzte Katalysator für die weitere Verwendung verloren.

Neben den homogenkatalytischen Verfahren ist die Verwendung von heterogenen Katalysatoren weitgehend unbekannt.

Ein heterogenes Katalysesystem wurde von Yang, Jin-Fei in Yingyong Huaxue 2003, 20(2), 201-202 unter Verwendung von $TiSiW_{12}O_{40}/TiO_2$ kürzlich für die Herstellung von $(ClCH_2CH_2O)_3PO$ beschrieben. Nachteilig bei der Verwendung des Katalysators ist die vergleichsweise aufwändige Herstellung.

Eine kontinuierliche Produktionsmethode von 2-haloalkylierten Phosphaten mittels heterogener Katalysatoren wird in CN 1 034 206 beschrieben. Hierbei wird BeO eingesetzt. Das Verfahren erlaubt die Herstellung von säurearmen Produkten (Säurezahl < 0,2 mg KOH/g Substanz) wie $(MeCHClCH_2O)_3PO$, $(ClCH_2CHClCH_2O)_3PO$ und $(ClCH_2CH_2O)_3PO$. Nachteilig bei der Verwendung des Katalysators ist die potentielle Freisetzung von sehr giftigen Berylliumsalzen.

In US 3 557 260 wird die Verwendung von Sulfaten verschiedener Elemente vorgeschlagen. Die erforderliche Reaktionszeit liegt bei ca. 80 h und dauert im Vergleich zum Stand der Technik für wirtschaftliche Prozesse deutlich länger.

Die Aufgabe der vorliegenden Erfindung bestand deshalb darin, ein Verfahren zur Herstellung phosphorhaltiger Alkoxylierungsprodukte unter Verwendung heterogener Katalysatoren zu entwickeln, wobei die Nachteile des Standes der Technik vermieden werden.

Die Lösung der Aufgabe und somit Gegenstand der vorliegenden Erfindung ist ein Verfahren zur Herstellung von säurearmen, phosphorhaltigen Alkoxylierungsprodukten durch Umsetzung von Phosphortri- und/oder Phosphoroxihalogeniden mit Alkylenoxiden unter Verzicht auf zusätzliche Wasser- bzw. Alkaliwäsche der phosphorhaltigen Alkoxylierungsprodukte, dadurch gekennzeichnet, dass man Aluminiumoxid-haltige, heterogene Katalysatoren einsetzt.

Überraschenderweise zeigen die mittels Aluminiumoxid-haltiger heterogener Katalysatoren hergestellten phosphorhaltigen Alkoxylierungsprodukte eine im Vergleich zum Stand der Technik deutlich niedrigere Säurezahl. Die weiteren Vorteile des erfindungsgemäßen Verfahrens auf Basis heterogener Aluminiumoxid-haltiger Katalysatoren liegen in der leichten, wasserfreien Abtrennbarkeit des Katalysators von den Ausgangssubstanzen und den Reaktionsprodukten. Die leichte Abtrennbarkeit erlaubt es somit auf eine aufwändige Produktwäsche zu verzichten und den Produktionsprozess gegenüber dem Stand der Technik wirtschaftlicher zu gestalten. Die Bildung saurer Nebenprodukte wird unterdrückt, was an den extrem niedrigen Säurezahlen der phosphorhaltigen Alkoxylierungsprodukte sichtbar ist. Darüber hinaus kann der eingesetzte Katalysator bei diskontinuierlicher Verfahrensweise erneut eingesetzt werde.

Als phosphorhaltige Edukte werden im erfindungsgemäßen Verfahren vorzugsweise Phosphortri- und/oder Phosphoroxihalogenide, insbesondere Phosphortrichlorid und/oder Phosphoroxichlorid, eingesetzt und einzeln oder im Gemisch untereinander mit den Alkylenoxiden zur Reaktion gebracht. Beispiele für Alkylenoxide sind Ethylenoxid, Propylenoxid, Styroloxid, Cyclohexenoxid, Cyclopentenoxid, Glycidylether, Epichlorhydrin, epoxidiertes Polybutadien, epoxidierte ungesättigte Öle. Dabei können die Alkylenoxide auch im Gemisch untereinander mit den Phosphortri- und/oder Phosphoroxihalogeniden eingesetzt werden. Auf diese Weise können phosphorhaltige Alkoxylierungsprodukte wie z.B. Tri(chlorpropyl)phosphat (TCPP), Tri(chlorethyl)phosphat (TCEP), Tri(chlorpropyl)phosphit oder Tri(chlorethyl)phosphit erhalten werden.

In einer besonders bevorzugten Ausführungsform werden als Alkylenoxid Propylenoxid und/oder Ethylenoxid eingesetzt.

Als Aluminiumoxid-haltige heterogene Katalysatoren werden bevorzugt Verbindungen der allgemeinen Formel

(I)

$$[Al)_l^{3+}(B)_n^{b+}]O_m \qquad (I)$$

eingesetzt, worin

B für ein Metall oder Nichtmetall der Reihe Li, Na, K, Mg, Ca, Sr, Ba, Sc, Y, Ln, Ti, Zr, Hf, V, Nb, Ta, Cr, Mo, W, B, Ga, In, Si, Ge, Sn, Pb, P, As, Sb, Bi steht,

b für die Wertigkeit des Metalls oder Nichtmetalls B und für eine ganze Zahl zwischen 1 und 6 steht,

1, n, m für numerische Variablen stehen, die unabhängig aus den Zahlen 0,0001 bis 4,0000 zu wählen sind,

so dass gilt:

$$2 \bullet m = l \bullet 3 + n \bullet b.$$

Beispiele für (Misch)metalloxide können Oxide der Elemente der Nebengruppe des Periodensystems der Elemente oder Oxide der Metalle der Gruppe 13-15 des Periodensystems der Elemente sein. Dabei wird im Folgenden der Begriff "Periodensystem der Elemente" nach IUPAC (Nomenclature of Inorganic Chemistry 1989) verstanden. Besonders bevorzugt sind die (Misch)metalloxide der Gruppe 3-6, 13, 14 des Periodensystems der Elemente.

Insbesondere bevorzugt steht B für Ionen der Elementreihe

Na, K, Mg, Ca, Sc, Y, Ti, Zr, W, Si, Sn, wobei die übrigen Variablen die oben genannten Bedeutungen haben.

Erfindungsgemäß ganz besonders bevorzugt wird im erfindungsgemäßen Verfahren $Al_2O_3$ eingesetzt.

Erfindungsgemäß können aber auch sogenannte Aluminiumoxid-haltige Mischoxide als heterogene Katalysatoren eingesetzt werden.

Beispiele für gemischte Oxide sind:

$SiO_2*Al_2O_3$, $SnO_2*Al_2O_3$, $TiO_2*$, $Al_2O_3$, $ZrO_2*Al_2O_3$, $WO_3*Al_2O_3$, $Sc_2O_3*Al_2O_3$, $Y_2O_3*Al_2O_3$, $Na_2O*Al_2O_3$, $K_2O*Al_2O_3$, $MgO*Al_2O_3$, $CaO*Al_2O_3$.

Dabei sind die Mischoxide nicht nur als stöchiometrische Kombinationen sondern auch als Kombinationen nichtstöchiometrischer Zusammensetzungen aufzufassen. Dies soll durch das Symbol ,, * "zum Ausdruck gebracht werden. Insbesondere können auch Kombinationen von Metalloxiden ein und desselben Elements in unterschiedlicher Oxidationsstufe Verwendung finden.

Die eingesetzten heterogenen Katalysatoren bestehen dann entsprechend aus Mischmetalloxiden oder Metallnichtmetalloxiden und können darüber hinaus durch weitere chemische Prozesse modifiziert sein. Beispiele für derartige Modifizierungen sind die Sulfatierung, Hydratisierung oder Calcinierung.

Zur Anwendung als heterogene Katalysatoren bei der Herstellung von alkoxylierten phosphorhaltigen Verbindungen können einerseits physikalisch hergestellte Mischungen von Aluminiumoxid-haltigen Metalloxiden, z.B. durch Verreibung oder Vermahlung kommen. Andererseits ist auch die Verwendung von heterogen Aluminiumoxid-haltigen Katalysatoren möglich, die mittels Sol/Gel-Verfahren erhalten wurden.

Die heterogenen Aluminiumoxid-haltigen Katalysatoren zeichnen sich dabei vorzugsweise durch weitgehende Unlöslichkeit im Reaktionsmedium aus und können vom Reaktionsmedium durch einfache nichtwässrige Methoden entfernt werden; beispielsweise durch einfache Filtrationsmethoden oder durch Ausnutzung von Zentrifugalkräften.

Das erfindungsgemäße Verfahren zur Herstellung von phosphorhaltigen Alkoxylierungsprodukten mittels Aluminiumoxid-haltiger heterogener Katalysatoren kann sowohl kontinuierlich als auch diskontinuierlich durchgeführt werden. Wird das Verfahren diskontinuierlich durchgeführt, so ist es dadurch gekennzeichnet, dass der heterogene Aluminiumoxid-haltigen Katalysator vor der Umsetzung von Phosphortri- und/oder Phosphoroxihalogenid mit Alkylenoxiden in zwei oder mehreren Teilmengen vor oder während der Reaktion zugegeben wird. Die Umsetzung erfolgt bei Temperaturen von 0 bis 100°C. Vorzugsweise liegen die Reaktionstemperaturen zwischen 50 bis 80°C. Die Reaktion erfolgt drucklos oder unter leichtem Überdruck von bis zu 1 MPa. Das Phosphortri- und/oder Phosphoroxihalogenid wird im Reaktionsgefäß vorgelegt und nach Katalysatorzugabe das Alkylenoxid kontinuierlich eindosiert. Das Reaktionsmedium kann durch Zugabe von phosphorhaltigen Alkoxylierungsprodukten mit einem der Reaktionspartner oder davon getrennt verdünnt werden. Nach dem Ende der Alkylenoxiddosierung wird bei Temperaturen von 60 bis 130°C eine Nachreaktionsphase angeschlossen und abschließend werden durch eine Vakuumdestillation bzw. ein Stickstoffstripping bei Temperaturen von 90 bis 150°C und Drücken von bis zu < 0,05 MPa leichtflüchtige Verunreinigungen entfernt. Vorzugsweise erfolgt die Entfernung von leichtflüchtigen Bestandteilen bei 130°C und 40 mbar. Eine Nachbehandlung des Katalysators ist nicht erforderlich. In diskontinuierlichen Herstellverfahren von alkoxylierten phosphorhaltigen Verbindungen werden die Aluminiumoxid-haltigen Katalysatoren in einer Menge von 0,02 Gew.-% bis 10 Gew.-%, bezogen auf die eingesetzte Phosphorverbindung, angewendet und dem phosphorhaltigen Edukt zugesetzt.

Alternativ kann auch in einer kontinuierlichen Arbeitsweise die Synthese von alkoxylierten, phosphorhaltigen Verbindungen unter Einsatz heterogener Aluminiumoxid-haltiger Katalysatoren betrieben werden, wobei beispielsweise Fließbettreaktoren oder Rohrreaktoren zu Einsatz kommen. Dabei ist der heterogene Aluminiumoxid-haltiger Katalysator die stationäre Phase und das Reaktionsmedium die mobile Phase. Die Reaktionsbedingungen sind dabei ähnlich denen, wie sie bereits oben in Bezug auf die diskontinuierliche Verfahrensweise beschrieben werden.

### Beispiele

### Beispiel 1

6 g $Al_2O_3$ werden mit $POCl_3$ (76.8 g, 0,5 mol) zusammen in einen Kolben eingewogen und unter Vakuum über Nacht stehengelassen. Die $POCl_3$ Menge wird danach kontrolliert und ergänzt. Dann wird Trichlorpropylphosphat (TCPP) (100 g, 0,3 mol) zugegeben und Propylenoxid (102g, 1,75 mol) innerhalb von 4 h zudosiert. Es wird 2h bei 45°C nachgerührt.

Ausbeute hergestelltes TCPP : 158 g, 96% d. Th.bezogen auf $POCl_3$.

**Beispiel 2**

| Katalysator | $T_R$ [°C] | $^{31}$P-NMR [Mol % TCPP] 0 bis -5,5 ppm | Rest-PO [GCFl%] | OP(Oiso)3 | Op(On)3 | OP(Oiso)2 (On) | OP(Oiso) (On)2 | TCPP-Ether | 2-MP | SZ mg KOH/g Probe | AAS [ppm Metall] |
|---|---|---|---|---|---|---|---|---|---|---|---|
| | | | | | | | | | | | |
| TiCl$_4$ nicht erfindungsmäß | 65 | | 0,01 | 66,3 | 0,2 | 25,6 | 3,7 | 2,9 | 0,1 | | |
| | | | | | | | | | | | |
| SiO$_2$Al$_2$O$_3$ ( G0202) | 75 | 97,1 | 2,92 | 48,2 | 0,8 | 31,7 | 8,4 | 3,1 | 0,0 | 8,9 | < 1 |
| Al$_2$O$_3$(CSS 350) | 75 | 98,2 | 4,84 | 50,0 | 0,5 | 29,7 | 6,3 | 3,3 | 0,0 | < 1,0 | 18 |
| Al$_2$O$_3$(CSS 350)/MgO | 75 | 96,3 | 6,21 | 51,7 | 0,5 | 23,9 | 5,2 | 2,5 | 0,0 | < 1,0 | |

Allgemeine Arbeitsvorschrift:

Es werden 5 g $POCl_3$ vorgelegt und mit dem Katalysator (1g) versetzten. Dann wird auf 50 °C erwärmt und mittels einer Telabpumpe Typ BF 411/30 (Einstellung Pumpe HUB = 30; Leistung = 50 % = ca. 0,5 ml/min) eine Mischung von 11,7 g ( 7 ml ) $POCl_3$ und 20,9 g (25,1 ml) Propylenoxid zugetropft. Die Temperatur wird dabei durch Kühlung mittels Wasserbad zwischen 40 und 50 °C (60 und 70°C) eingehalten. Nach Abschluss der Zugabe (GC/NMR) folgt eine Nachrührzeit von 180 min bei 50°C (70°C) mit anschließender Analyse mittels GC bzw. 31P-NMR, Säurezahlbestimmung und Bestimmung des Metallgehalts durch Atomabsorptionsspektroskopie.

**Patentansprüche**

1. Verfahren zur Herstellung von phoshorhaltigen Alkoxylierungsprodukten durch Umsetzung von Phosphortri- und/ oder Phosphoroxyhalogeniden mit Alkylenoxiden unter Verzicht auf zusätzliche Wasser- bzw. Alkaliwäsche der phosphorhaltigen Alkoxylierungsprodukte, **dadurch gekennzeichnet, dass** Aluminiumoxid-haltige heterogene Katalysatoren einsetzt werden.

2. Verfahren gemäß Anspruch 1, **dadurch gekennzeichnet, dass** als Katalysatoren Verbindungen der Formel (I)

$$[Al)_l^{3+}(B)_n^{b+}]O_m \qquad (I)$$

eingesetzt werden, worin
B für ein Metall oder Nichtmetall der Reihe Li, Na, K, Mg, Ca, Sr, Ba, Sc, Y, Ln, Ti, Zr, Hf, V, Nb, Ta, Cr, Mo, W, B, Ga, In, Si, Ge, Sn, Pb, P, As, Sb, Bi steht,
b für die Wertigkeit des Metalls oder Nichtmetalls B und für eine ganze Zahl zwischen 1 und 6 steht,
1, n, m für numerische Variablen stehen, die unabhängig aus den Zahlen: 0,0001 bis 4,0000 zu wählen sind,
so dass gilt:

$$2 \bullet m = l \bullet 3 + n \bullet b.$$

3. Verfahren gemäß Anspruch 1, **dadurch gekennzeichnet, dass** als Aluminiumoxid-haltige Katalysatoren Mischoxide der Reihe $SiO_2{*}Al_2O_3$, $SnO_2{*}Al_2O_3$, $TiO_2{*}$, $Al_2O_3$, $ZrO_2{*}Al_2O_3$, $WO_3{*}Al_2O_3$, $Sc_2O_3{*}Al_2O_3$, $Y_2O_3{*}Al_2O_3$, $Na_2O{*}Al_2O_3$, $K_2O{*}Al_2O_3$, $MgO{*}Al_2O_3$, $CaO{*}Al_2O_3$ eingesetzt werden.

4. Verfahren gemäß Anspruch 1, **dadurch gekennzeichnet, dass** dieses kontinuierlich oder diskontinuierlich durchgeführt wird.

5. Verfahren gemäß Anspruch 1 oder 2, **dadurch gekennzeichnet, dass** als Aluminiumoxid-haltiger Katalysator $Al_2O_3$ oder $SiO_2{*}Al_2O_3$ eingesetzt wird.

6. Verfahren nach Anspruch 1, **dadurch gekennzeichnet, dass** als Alkylenoxid vorzugsweise Propylenoxid und/oder Ethylenoxid eingesetzt werden.

7. Verwendung von Aluminiumoxid-haltigen heterogenen Katalysatoren zur Herstellung von alkoxylierten, phosphorhaltigen Verbindungen.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 125035
- CN 1034206
- US 3557260 A

**In der Beschreibung aufgeführte Nicht-Patentliteratur**

- **YANG ; JIN-FEI.** *Yingyong Huaxue,* 2003, vol. 20 (2), 201-202